# EUROPÄISCHE PATENTSCHRIFT

(11) **EP 3 521 212 B1**
(45) Veröffentlichungstag und Bekanntmachung des Hinweises auf die Patenterteilung: **09.03.2022**
(21) Anmeldenummer: 19151382.9
(22) Anmeldetag: 11.01.2019
(51) Int. Cl.: B65G 9/00

(54) **TRAGVORRICHTUNG ZUM AUFNEHMEN VON WAREN**
SUPPORT DEVICE FOR HOLDING ARTICLES
DISPOSITIF PORTEUR DESTINÉ À RECEVOIR DES MARCHANDISES

(30) Priorität: 02.02.2018 DE 102018201639
(43) Veröffentlichungstag der Anmeldung: 07.08.2019
(73) Patentinhaber: Dürkopp Fördertechnik GmbH, 33719 Bielefeld (DE)
(72) Erfinder: Janzen, Paul, 33619 Bielefeld (DE)
(74) Vertreter: Rau, Schneck & Hübner Patentanwälte Rechtsanwälte PartGmbB

(56) Entgegenhaltungen:
- DE-A1-102014 224 872
- DE-U1-202017 105 508
- US-A- 3 827 471

## Beschreibung

Die Erfindung betrifft eine Tragvorrichtusng zum Aufnehmen von Waren. Aus der EP 2 130 968 A1 ist eine Tragvorrichtung mit einer Rückwand und einer flexiblen Bodenwand bekannt. Die im Wesentlichen steife Rückwand weist dabei eine Kupplung auf, in die ein an einem freien Ende der Bodenwand angeordnetes Gegen-Kupplungs-Mittel einrastbar ist. In einem Verschlusszustand begrenzt die Bodenwand ein Tragvolumen zum Aufnehmen der Waren nach unten und das Gegen-Kupplungs-Mittel ist in Eingriff mit der Kupplung. Durch Lösen der Kupplung kann die Bodenwand in einen Offenzustand überführt werden, in dem das Tragvolumen und somit die in der Tragvorrichtung aufgenommenen Waren nach unten freigegeben sind. Nachteilig ist, dass die Waren durch transportbedingte Vibrationen oder durch Beschleunigungen in Folge von Anfahr- oder Abbremsvorgängen seitlich aus der Tragvorrichtung herausfallen können.

Tragvorrichtungen sind ferner bekannt aus der DE 20 2017 105 508 U1,

US 3,827,471 A und aus der WO 2017/178 225 A1. Die DE 20 2017 105 508 U1 offenbart eine Tragvorrichtung gemäss dem Oberbegriff des Anspruchs 1.

Der Erfindung liegt die Aufgabe zugrunde, eine Tragvorrichtung zum Aufnehmen von Waren derart zu verbessern, dass die Waren in der Tragvorrichtung zuverlässig und verliersicher gehalten werden, wobei insbesondere die Tragvorrichtung in einem Verschlusszustand und in einem Offenzustand anordenbar ist.

Die Aufgabe wird durch die Merkmale des Anspruchs 1 gelöst. Der Kern der Erfindung besteht darin, dass die Tragvorrichtung eine flexible Bodeneinrichtung umfasst, welche eine Bodenwand aufweist, seitenwandfrei ausgeführt ist und in einem Verschlusszustand und in einem Offenzustand anordenbar ist, wobei die Bodeneinrichtung seitlich an der Bodenwand angeordnete Sicherungsmittel zum verliersicheren Halten der Waren in einem Tragvolumen der Tragvorrichtung aufweist. Erfindungsgemäß wurde erkannt, dass die Bodeneinrichtung durch die seitenwandfreie Ausführung besonders flexibel ausgebildet sein kann und zugleich die seitliche Anordnung der Sicherungsmittel an der Bodenwand ein Halten der Waren in dem Tragvolumen zuverlässig gewährleistet. Unter der seitenwandfreien Ausbildung der Bodeneinrichtung ist zu verstehen, dass die Bodeneinrichtung keine Seitenwand aufweist und dass an der Bodeneinrichtung, insbesondere an der Bodenwand, keine Seitenwand angebracht ist. Die seitenwandfreie Ausbildung der Bodeneinrichtung gewährleistet ein flexibles Verformen der Bodeneinrichtung zwischen dem Verschlusszustand und dem Offenzustand. Denn durch die seitenwandfreie Ausbildung wird eine stabile Taschen- oder Schalenform vermieden. Das Freigeben und Entladen der Waren aus dem Tragvolumen kann durch die so erreichte Flexibilität der Bodeneinrichtung besonders zuverlässig erfolgen. Dadurch, dass die Form der Bodeneinrichtung besonders gut an Waren unterschiedlicher Abmessungen anpassbar ist können, diese spielfrei in der Tragvorrichtung gehalten werden.

Die Tragvorrichtung gewährleistet ein besonders zuverlässiges Halten in dem Tragvolumen. Die mindestens eine Erhebung ist an der Bodenwand angebracht.

Die Bodenwand kann im Bereich der mindestens einen Erhebung eine Versteifung, insbesondere eine Flächenversteifung, aufweisen. Die Versteifung kann lediglich in einem Seitenbereich der Tragvorrichtung angeordnet sein oder sich zwischen den beiden Seitenbereichen erstrecken. Die Versteifung kann beispielsweise in Form mindestens eines Flachstabes ausgebildet sein.

Die Tragvorrichtung gewährleistet auch ein verliersicheres Halten der Waren in dem Tragvolumen. Erfindungsgemäss weist die mindestens eine Erhebung eine kreisförmige oder ovale Querschnittsfläche, senkrecht zu der Haupterstreckungsrichtung, auf. Alternativ kann die mindestens eine Erhebung als im Querschnitt rechteckförmiger Steg ausgebildet sein. Vorteilhaft wird hierdurch erreicht, dass die mindestens eine Erhebung gegenüber einer Seitenkante der Bodenwand besonders biegesteif ausgebildet ist.

Die Tragvorrichtung gewährleistet zudem ein verliersicheres Halten der Waren in dem Verschlusszustand und eine zuverlässige Freigabe der Waren in dem Offenzustand. Erfindungsgemäss sind die mehreren Erhebungen entlang des jeweiligen Seitenrandes der Bodenwand zueinander beabstandet angeordnet. Vorzugsweise sind sämtliche Erhebungen des Sicherungsmittels auf jeder Seite der Bodeneinrichtung in einer Ebene, insbesondere einer Ebene quer zu der Längsachse, angeordnet. Der Abstand zwischen zwei benachbarten Erhebungen beträgt vorzugsweise mindestens 2 mm, insbesondere mindestens 5 mm, insbesondere mindestens 15 mm. Vorteilhaft wird hierdurch erreicht, dass das Sicherungsmittel und somit die Bodeneinrichtung besonders flexibel ausgebildet sind. Dadurch ist die Bodeneinrichtung besonders einfach zwischen dem Verschlusszustand und dem Offenzustand verlagerbar. Insbesondere ist die Anordnung der Tragvorrichtung im Verschlusszustand durch das Sicherungsmittel nicht behindert oder blockiert.

Gemäß einem Aspekt der Erfindung ist die Tragvorrichtung über eine vertikale Erstreckung der Bodeneinrichtung seitenwandfrei ausgebildet. Die Tragvorrichtung kann eine parallel zu der Vorderwand und/oder zu der Rückwand verlaufende Längsachse aufweisen. Die Bodenwand kann in dem Verschlusszustand, insbesondere gegenüber der Längsachse, einfach gekrümmt sein. Vorzugsweise ist die Bodenwand durch die flexible Ausbildung der Bodeneinrichtung in dem Offenzustand in eine ebene Form überführbar.

Die Sicherungsmittel können sich zur flexiblen Ausbildung der Bodeneinrichtung jeweils über eine Länge von maximal 30 %, insbesondere von maximal 20 %, insbesondere von maximal 10 %, insbesondere von maximal 5 %, eines seitlichen Randes der Bodeneinrichtung erstrecken. Vorzugsweise überdecken die an der Bodenwand seitlich angeordneten Sicherungsmittel die Seitenflächen nicht vollständig. Vorzugsweise ist eine jeweilige von der Bodenwand begrenzte wandfrei ausgebildete Seitenfläche zu maximal 70 %, insbesondere zu maximale 50 %, insbesondere zu maximal 30 %, insbesondere zu maximal 20 %, insbesondere zu maximal 10 %, von den Sicherungsmitteln überdeckt. Vorteilhaft wird hierdurch erreicht, dass die Waren im Bereich der Bodeneinrichtung sicher gehalten werden können und die notwendige Flexibilität der Bodeneinrichtung zur Verformung zwischen dem Verschlusszustand und dem Offenzustand gewährleistet wird.

Die Flexibilität der Bodeneinrichtung stellt dabei die flexible Anpassung der Tragvorrichtung auf Waren unterschiedlicher Abmessungen sicher. Die Form der Tragvorrichtung passt sich der Form der zu transportierenden Ware an. Durch die seitenwandfreie Ausbildung der Bodeneinrichtung sind beispielsweise ein Bereich, in dem die Rückwand mit der Bodeneinrichtung verbunden ist, und ein Bereich, in dem die Vorderwand mit der Bodeneinrichtung verbunden ist, mit variablem Abstand zueinander anordenbar. Waren unterschiedlicher Abmessungen, insbesondere Waren mit besonders großer oder besonders geringer Dicke, können hierdurch von der Tragvorrichtung gleichsam fest umschlossen werden. Die flexibel ausgebildete Bodeneinrichtung legt sich bedingt durch das Eigengewicht der Waren, insbesondere unmittelbar, an diese an. Insbesondere für Waren geringer Abmessungen und geringen Gewichts bieten die an der Bodenwand angeordneten Sicherungsmittel zusätzlichen Halt in seitlicher Richtung. Die Tragvorrichtung ist somit fehlerunanfällig und gewährleistet zuverlässig das Einbringen der Waren in das Tragvolumen und deren verliersicheren Transport.

Die Tragvorrichtung umfasst eine Rückwand, welche das Tragvolumen zum Aufnehmen der Waren nach hinten begrenzt, eine das Tragvolumen nach vorne begrenzende Vorderwand und die flexible Bodeneinrichtung. Die Rückwand kann an einem Trägerrahmen angebracht sein. Vorzugsweise ist die Rückwand oben, unten sowie an den beiden Seiten mit dem Trägerrahmen verbunden. Vorzugsweise ist die Rückwand starr ausgebildet. Ein oberes freies Ende der Vorderwand kann über einen Halterahmen mit dem Trägerrahmen verbunden sein. Der Halterahmen kann aus einem gebogenen Draht, insbesondere einem Metalldraht, bestehen. Zur Verbindung der Vorderwand mit dem Halterahmen kann dieser durch eine abgenähte Schlaufe der Vorderwand geführt sein. Vorzugsweise ist der Halterahmen gelenkig mit dem Trägerrahmen verbunden. Vorzugsweise besteht die Vorderwand aus einem flexiblen Material. Die Vorderwand kann biegeweich ausgebildet sein. Die Rückwand, die Vorderwand und die Bodenwand können sich entlang der Längsachse erstrecken. Vorzugsweise sind die Bodeneinrichtung, insbesondere die Bodenwand, und die Vorderwandeinteilig, insbesondere einstückig, miteinander verbunden.

Die Tragvorrichtung ist insbesondere als Transporttasche ausgeführt, die zum Transport von Waren in einer Hängeförderanlage dient.

Die Bodenwand kann aus mehreren, insbesondere starren, Bodensegmenten zusammengesetzt sein. Die Bodensegmente können, insbesondere im Bereich ihrer Kanten, durch Gelenke miteinander verbunden sein. Vorzugsweise sind sämtliche Gelenkachsen der Gelenke parallel zu der Längsachse orientiert. Durch die gelenkige Verbindung jeweils benachbarter Bodensegmente ist die Bodenwand, insbesondere gegenüber der Längsachse, biegeweich ausgebildet. Eine Bodeneinrichtung mit einer derartigen Bodenwand ist flexibel ausgeführt. Die Bodensegmente sind insbesondere plattenartig ausgeführt. Die Bodensegmente können aus einem Kunststoffmaterial und/oder aus Metall hergestellt sein. Die Gelenke sind insbesondere linienartig, insbesondere entlang der Längsachse orientiert. Die Gelenke können beispielsweise als Scharnier, insbesondere als einteilig angegossenes Filmscharnier, ausgeführt sein. Ein Filmscharnier ist insbesondere einteilig mit den beiden gelenkig verbundenen Bodensegmenten verbunden.

Die Tragvorrichtung kann eine Seitenwand aufweisen. Zur seitenwandfreien Ausbildung der Bodeneinrichtung ist die Seitenwand der Tragvorrichtung nicht mit der Bodeneinrichtung, insbesondere der Bodenwand, verbunden. Hierdurch wird vermieden, dass die Bodeneinrichtung eine Tasche ausbildet, aus der die Waren nicht oder nur unzuverlässig freigebbar wären. Vorzugsweise weist die Bodeneinrichtung im Verschlusszustand eine einfach gekrümmte Form auf.

Der Trägerrahmen der Tragvorrichtung kann ein Lagermittel zur Anbringung der Tragvorrichtung an einem verschiebbar in einem Schienensystem gelagerten Rolladapter aufweisen. Der Trägerrahmen kann über das Lagermittel mit einem Antriebssystem in Verbindung stehen.

Die mindestens eine Erhebung kann als, insbesondere ebene, Rippe oder als Steg ausgebildet sein. Eine Hauptebene der jeweiligen Rippe kann parallel zu einer der Seitenflächen orientiert sein. Die Hauptebene der jeweiligen Rippe kann auch senkrecht zu der Längsrichtung orientiert sein. Vorzugsweise ist die jeweilige Rippe starr ausgebildet. Die jeweilige Rippe kann einstückig mit dem jeweiligen Bodensegment verbunden sein. Vorzugsweise sind die Rippen benachbarter Bogensegmente entlang der Längsachse zueinander versetzt angeordnet. Vorteilhaft wird hierdurch erreicht, dass die Rippen zueinander benachbarter Bodensegmente sich in einer Seitenansicht, in Richtung der Längsachse, zumindest teilweise überlappen können. Die Flexibilität der Bodeneinrichtung bleibt dabei erhalten. Durch die Überlappung wird gewährleistet, dass auch Waren geringer Abmessungen sicher in dem Tragvolumen gehalten werden können.

Die mindestens eine Erhebung kann durch eine Nietverbindung und/oder eine Schraubverbindung und/oder eine Klebeverbindung mit der Bodenwand verbunden sein. Vorteilhaft wird hierdurch die sichere Anbringung der mindestens einen Erhebung an der Bodenwand gewährleistet.

Die mindestens eine Erhebung kann eine Haupterstreckungsrichtung aufweisen, welche quer, insbesondere senkrecht, zu der Bodenwand orientiert ist. Alternativ kann die Haupterstreckungsrichtung der mindestens einen Erhebung schräg zu der Bodenwand, insbesondere in Richtung des Tragvolumens, orientiert sein. Vorzugsweise beträgt die Abmessung der mindestens einen Erhebung in Haupterstreckungsrichtung mindestens 2 mm, insbesondere mindestens 5 mm, insbesondere mindestens 10 mm, insbesondere mindestens 20 mm, insbesondere mindestens 30 mm, insbesondere mindestens 50 mm. Die Grundfläche der mindestens einen Erhebung quer zu der Haupterstreckungsrichtung beträgt vorzugsweise höchstens 100 mm², insbesondere höchstens 70 mm², insbesondere höchstens 50 mm², insbesondere höchstens 25 mm², insbesondere höchstens 10 mm², insbesondere höchstens 5 mm². Vorteilhaft wird hierdurch erreicht, dass die Waren in der Tragvorrichtung in einer Senke zwischen den Erhebungen aufgenommen werden und somit verliersicher transportiert werden können.

Vorzugsweise weist die Rückwand und/oder die Vorderwand ebenfalls seitlich angeordnete Sicherungsmittel auf. Waren, welche in vertikaler Richtung über die Bodeneinrichtung hinausragen, können somit besonders sicher in der Tragvorrichtung gehalten werden.

Eine Tragvorrichtung nach Anspruch 2 gewährleistet eine einfache und stabile Anbringung der Sicherungsmittel an der Bodenwand. Der biegeweiche Grundkörper kann aus einem elastischen, insbesondere gummielastischen, Material bestehen. Vorzugsweise sind sämtliche Erhebungen des an einer Seite der Bodenwand angeordneten Sicherungsmittels an demselben Grundkörper angebracht. Vorzugsweise ist die mindestens eine Erhebung einstückig mit dem Grundkörper verbunden. Der Grundkörper kann mit der Bodenwand verklebt und/oder vernäht sein.

Vorteilhaft wird hierdurch erreicht, dass das Sicherungsmittel besonders zuverlässig mit der Bodenwand verbunden ist.

Der Grundkörper kann in Form eines Bandes ausgebildet sein, an dem die mindestens eine Erhebung angebracht ist. Das Sicherungsmittel ist so besonders einfach, insbesondere als Meterware, herstellbar und zur Anbringung an der Bodeneinrichtung konfektionierbar.

Eine Tragvorrichtung nach Anspruch 3 gewährleistet ein sicheres Halten der Waren in dem Tragvolumen und eine wirtschaftliche Herstellung des Sicherungsmittels. Vorzugsweise ist die mindestens eine Erhebung aus einem elastischen Material, insbesondere einem gummi-elastischem Material, insbesondere aus einem gummi-elastischen Kunststoff, hergestellt. Vorteilhaft wird hierdurch erreicht, dass zwischen den Waren und der mindestens einen Erhebung ein besonders hoher Haftreibungskoeffizient wirkt. Vorzugsweise sind der Grundkörper und die mindestens eine Erhebung aus demselben Material hergestellt. Das Sicherungsmittel ist somit besonders einfach und kostengünstig herstellbar.

Eine Tragvorrichtung nach Anspruch 4 gewährleistet eine zuverlässige Aufnahme der Waren in dem Verschlusszustand und eine sichere Freigabe der Waren in dem Offenzustand. Durch die U-förmige Ausbildung der Bodeneinrichtung in dem Verschlusszustand können Waren sicher in der durch diese Form gebildete Senke aufgenommen werden. Die U-förmige Ausbildung der Bodeneinrichtung ergibt sich insbesondere dann, wenn sich Vorderwand und Rückwand in Vertikalrichtung im Westentlichen gleichlang erstrecken. Alternativ ist es denkbar, dass die Vorderwand und die Rückwand unterschiedlich lang ausgeführt sind, sodass die jeweilige Verbindungsstelle der Bodeneinrichtung mit der Vorderwand bzw. der Rückwand an unterschiedlichen Vertikalpositionen angeordnet ist. In diesem Fall ist die Bodeneinrichtung im Verschlusszustand im Wesentlichen J-förmig ausgebildet. Wesentlich ist, dass die Bodeneinrichtung im Verschlusszustand als flexible Materialbahn ausgeführt ist, die im Wesentlichen eine Krümmung, insbesondere eine kreissegmentartige Krümmung und insbesondere eine Halbkreiskrümmung, aufweist. Durch Verformung der Bodeneinrichtung, insbesondere durch Biegung um die Längsachse, in eine im Querschnitt gerade Form, können die Waren im Offenzustand zuverlässig freigegeben werden. Die Waren können schwerkraftbedingt nach unten aus der Tragvorrichtung herausfallen, ohne zwischen der Rückwand und der Vorderwand zu verkanten oder in einer verbleibenden Senke der Bodeneinrichtung liegen zu bleiben.

Eine Tragvorrichtung nach Anspruch 5 gewährleistet eine einfache und zuverlässige Freigabe der Waren. Zur reversiblen lösbaren Befestigung der Bodeneinrichtung kann an dem Trägerrahmen und/oder der Rückwand und/oder der Vorderwand ein Arretiermittel angeordnet sein, wobei die Bodeneinrichtung an ihrem vorder- oder rückseitigen Rand ein damit verbindbares Gegenstück aufweisen kann. Vorzugsweise ist ein dem Gegenstück gegenüberliegender vorder- oder rückseitiger Rand der Bodeneinrichtung, insbesondere der Bodenwand, mit einem bodenseitigen Rand der Vorderwand oder der Rückwand, insbesondere einstückig, verbunden. Das Arretiermittel kann über einen Auslöser zwischen einer Verschlussstellung und einer Offenstellung anordenbar sein. Der Auslöser ist vorzugsweise an der Rückseite oder der Oberseite des Halterahmens angeordnet. Vorteilhaft wird hierdurch erreicht, dass die Bodeneinrichtung besonders einfach, insbesondere automatisierbar, von dem Verschlusszustand in den Offenzustand überführbar.

Eine Tragvorrichtung nach Anspruch 6 gewährleistet einen einfachen und automatisierbaren Transport der Waren. Vorzugsweise weist der Trägerrahmen ein Lagermittel zur verschiebbaren Lagerung der Tragvorrichtung an einem Schienensystem auf.

Eine Tragvorrichtung nach Anspruch 7 ist besonders wirtschaftlich herstellbar und gewährleistet ein verliersicheres Halten der Waren an dem Tragvolumen. Vorzugsweise ist die Rückwand und/oder die Vorderwand und/oder die Bodenwand aus einem textilen Material. Das textile Material kann, insbesondere auf einer dem Tragvolumen zugewandten Seite, eine Anti-Rutsch-Beschichtung, insbesondere eine Gummierung, aufweisen. Waren können somit besonders zuverlässig in der Tragvorrichtung gehalten werden.

Eine Tragvorrichtung nach Anspruch 8 gewährleistet ein sicheres Halten der Waren in dem Tragvolumen. Vorzugsweise ist das Stützmittel an der Rückwand und der Vorderwand angebracht. Vorzugsweise ist auf jeder Seite der Tragvorrichtung mindestens ein Stützmittel angeordnet. Das Stützmittel kann das Tragvolumen seitlich abschnittsweise oder vollständig begrenzen. Das Stützmittel kann das Tragvolumen auch im Bereich der Bodeneinrichtung seitlich abschnittsweise oder vollständig begrenzen.

Eine Tragvorrichtung nach Anspruch 9 gewährleistet ein sicheres Halten der Waren in dem Tragvolumen. Durch die Ausbildung des Stützmittels in Form einer Seitenwand können die Waren besonders zuverlässig in das Tragvolumen aufgenommen werden. Waren unterschiedlicher Abmessungen können durch diese Seitenwand gestützt und damit stabil in dem Tragvolumen gehalten werden.

Eine Tragvorrichtung nach Anspruch 10 gewährleistet ein sicheres Einbringen der Waren in das Tragvolumen. Durch die trichterförmige, insbesondere kegelstumpfsektormantelförmige Ausbildung der Seitenwand kann gewährleistet werden, dass die Waren stets zuverlässig in die Tragvorrichtung eingebracht werden. Ein seitliches Herausfallen der Waren während des Einbringens kann somit zuverlässig verhindert werden.

Eine Tragvorrichtung nach Anspruch 11 gewährleistet ein sicheres Halten der Waren in dem Tragvolumen. Vorzugsweise sind die Leinen und/oder die Stangen in einer Ebene quer zu der Längsachse und parallel zu dem Halterahmen angeordnet. Die Ausbildung des Stützmittels in Form von Leinen und/oder Stangen kann die Verbindung zwischen der Vorderwand und der Rückwand schubweich ausgebildet sein. Vorteilhaft wird hierdurch erreicht, dass sich die Vorderwand und die Rückwand besonders gut an die Waren anlegen, wodurch diese verliersicher in dem Tragvolumen gehalten werden können. Vorzugsweise weist jede Seite der Tragvorrichtung mindestens eine, insbesondere mindestens zwei, insbesondere mindestens drei, insbesondere mindestens fünf Leinen oder Stangen auf, welche sich zwischen der Rückwand und der Vorderwand erstrecken. Insbesondere können somit Waren großer Länge und geringen Querschnitts verliersicher in dem Tragvolumen gehalten werden. Ein seitliches Herauskippen der Waren aus der Tragvorrichtung kann zuverlässig verhindert werden.

Weitere vorteilhafte Ausgestaltungen, zusätzliche Merkmale und Einzelheiten der Erfindung ergeben sich aus der nachfolgenden Beschreibung von Ausführungsbeispielen anhand der Figuren. Es zeigen:
- Fig. 1: eine perspektivische Darstellung einer Tragvorrichtung, wobei eine Bodenwand in einem Verschlusszustand angeordnet ist und ein Tragvolumen nach unten begrenzt,
- Fig. 2: eine perspektivische Darstellung der Tragvorrichtung in Fig. 1, wobei die Bodenwand in einem Offenzustand angeordnet ist und das Tragvolumen nach unten freigibt,
- Fig. 3: eine perspektivische Darstellung eines Sicherungsmittels der Tragvorrichtung gemäß Fig. 1, wobei das Sicherungsmittel mehrere zueinander beabstandete, kegelförmige Erhebungen aufweist,
- Fig. 4: eine perspektivische Darstellung eines Sicherungsmittels gemäß einer alternativen Ausführungsform, wobei das Sicherungsmittel mehrere zueinander beanstandete und im Querschnitt dreieckförmige Erhebungen aufweist,
- Fig. 5: eine perspektivische Darstellung einer Tragvorrichtung gemäß einem alternativen Ausführungsbeispiel, wobei dieses seitliche Stützmittel zum verliersicheren Halten von Waren aufweist, welche als trichterförmige Seitenwände ausgebildet sind,
- Fig. 6: eine perspektivische Darstellung einer Tragvorrichtung gemäß einem alternativen Ausführungsbeispiel, wobei diese seitliche Stützmittel zum verliersicheren Halten der Waren aufweist, welche in Form von Leinen ausgebildet sind, und
- Fig. 7: eine perspektivische Darstellung einer Tragvorrichtung gemäß einem weiteren Ausführungsbeispiel, wobei die Bodenwand mehrere gelenkig miteinander verbundene Bodensegmente umfasst.

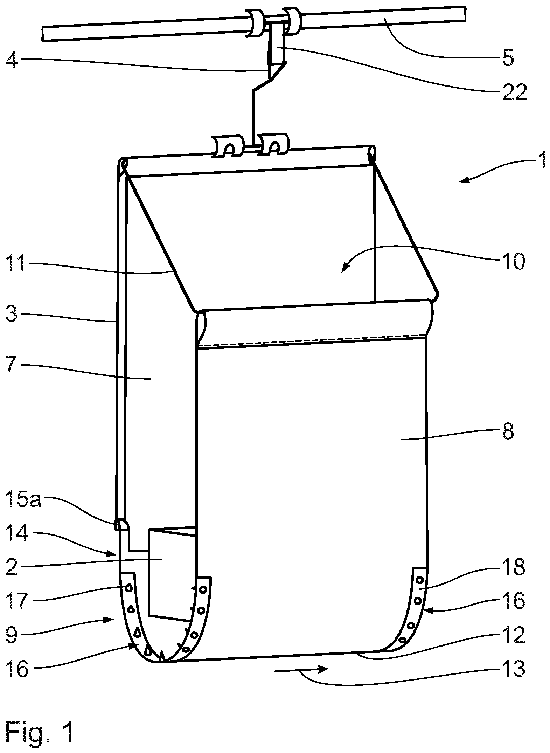

Nachfolgend ist anhand der Fig. 1 bis 3 ein Ausführungsbeispiel einer Tragvorrichtung 1 zum Aufnehmen von Waren 2 beschrieben. Die Tragvorrichtung 1 weist einen Trägerrahmen 3 auf, der über ein Lagermittel 4 an einem Schienensystem 5 verschiebbar gelagert ist. Das Lagermittel 4 ist insbesondere als Hacken ausgeführt, der an einem Rolladapter 22 eingeengt ist. Der Rolladapter 22 ist in dem Schienensystem 5 mittels eines nicht näher dargestellten Antriebs verlagerbar. Mit dem Rolladapter 22 kann eine einzelne Tragvorrichtung 1 entlang des Schienensystems in einer Hängeförderanlage geführt werden. Bezüglich der Details des Rolladapters und der Handhabung einzelner Tragvorrichtungen in einer Hängeförderanlage wird auf die EP 2 130 968 A1 verwiesen.

Die Tragvorrichtung 1 umfasst des Weiteren eine Rückwand 7, eine Vorderwand 8 sowie eine flexible Bodeneinrichtung 9.

Die Rückwand 7 ist an dem Trägerrahmen 3 angebracht. Die Rückwand 7 überragt den Trägerrahmen 3 nach unten. Ein Tragvolumen 10 zum Aufnehmen der Waren 2 wird durch die Rückwand 7 nach hinten begrenzt. Die Rückwand 7 ist an ihrer Oberseite, ihrer Unterseite sowie an ihrer linken und rechten Seite an dem Trägerrahmen 3 angebracht. Nach vorne ist das Tragvolumen 10 durch die Vorderwand 8 begrenzt.

Die Vorderwand 8 ist über einen Halterahmen 11 an dem Trägerrahmen 3 angebracht. Der Halterahmen 11 ist mit dem Trägerrahmen 3 gelenkig verbunden. Die Vorderwand 8 ist lediglich an ihrer Oberseite mit dem Halterahmen 11 verbunden. Zur Verbindung mit dem Halterahmen 11 weist die Vorderwand 8 an ihrer Oberseite eine abgenähte Lasche auf. Diese Lasche durchdringt der Halterahmen 11.

Die Bodeneinrichtung 9 umfasst eine Bodenwand 12. Die Rückwand 7, die Vorderwand 8 und die Bodenwand 12 erstrecken sich entlang einer Längsachse 13. Die flexible Bodeneinrichtung 9 ist gegenüber der Längsachse 13 biegeweich ausgebildet. Die Rückwand 7, die Vorderwand 8 und die Bodenwand 12 sind aus einem textilen Material hergestellt. Das textile Material weist eine gummierte Oberfläche auf, welche auf Seiten des Tragvolumens 10 angeordnet ist.

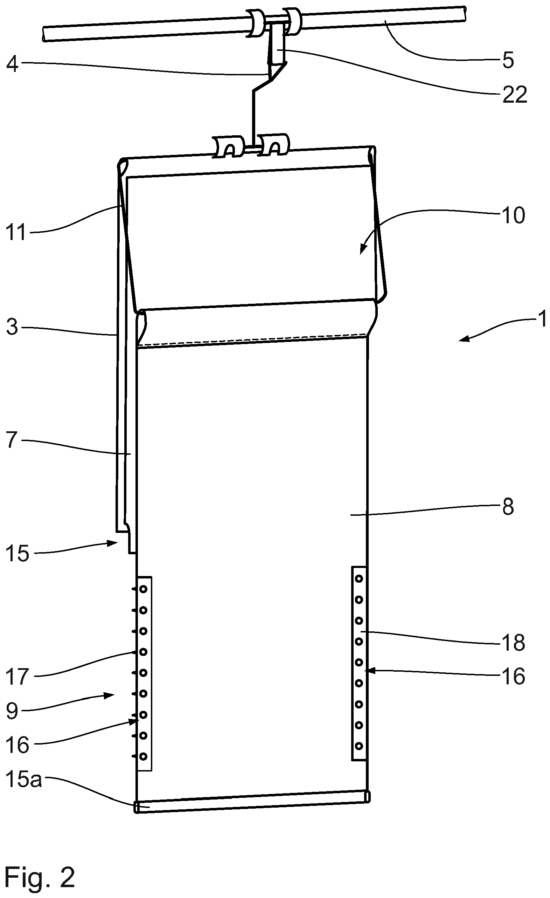

Die Bodeneinrichtung 9 ist in einem in Fig. 1 dargestellten Verschlusszustand 14 und in einem in Fig. 2 dargestellten Offenzustand 15 anordenbar. In dem Verschlusszustand 14 ist die Bodeneinrichtung 9 über den Trägerrahmen 3 mit der Rückwand 7 verbunden. Hierzu weist der Trägerrahmen 3 ein nicht dargestelltes reversibel lösbares Arretiermittel auf. Die Bodenwand 12 der Bodeneinrichtung 9 weist ein entsprechendes, mit dem Arretiermittel verbindbares Gegenstück 15a auf. In dem Verschlusszustand 14 steht das Gegenstück 15a in Eingriff mit dem Arretiermittel und die Bodeneinrichtung 9 ist U-förmig ausgebildet. In dem Verschlusszustand 14 begrenzt die Bodeneinrichtung 9 das Tragvolumen 10 nach unten.

Die Bodeneinrichtung 9 ist in dem Offenzustand 15 im Querschnitt gerade. Das Gegenstück steht außer Eingriff mit dem Arretiermittel und die Bodeneinrichtung 9 ist von dem Trägerrahmen 3 gelöst.

In dem Verschlusszustand 14 ist die Bodeneinrichtung 9 im Querschnitt U-förmig, insbesondere sofern sich keine Waren 2 in dem Tragvolumen 10 befinden. Bedingt durch das Gewicht der Waren 2 und die Flexibilität der Bodeneinrichtung 9 passt sich die Form der Bodeneinrichtung 9 an die Geometrie der daran anliegenden Waren 2 an. Je nach Form und Gewicht der in dem Tragvolumen 10 angeordneten Waren 2 begrenzt die Bodeneinrichtung 9 das Tragvolumen 10 demnach nicht ausschließlich nach unten, sondern ggf. auch nach hinten und/oder vorne. In dem in Fig. 1 darstellten Ausführungsbeispiel erstreckt sich die Bodeneinrichtung 9 unterhalb einer das Gegenstück 15a schneidenden Horizontalebene.

Die Bodeneinrichtung 9 weist seitliche Sicherungsmittel 16 auf. Die Sicherungsmittel 16 sind an den beiden seitlichen Rändern der Bodenwand 12 angeordnet. Die Sicherungsmittel 16 sind ausschließlich an der Bodeneinrichtung 9 angebracht. Alternativ oder zusätzlich können die Sicherungsmittel 16 auch an der Rückwand 7 und/oder der Vorderwand 8 angebracht sein.

Das Sicherungsmittel 16 weist mehrere Erhebungen 17 auf. Die Erhebungen 17 sind auf einem biegeweichen Grundkörper 18 angebracht. Jedes der beiden an den Seiten der Bodenwand 12 angeordneten Sicherungsmittel 16 weist den einstückig ausgebildeten Grundkörper 18 auf. Die Erhebungen 17 sind entlang des Grundkörpers 18 und entlang des jeweiligen seitlichen Randes der Bodenwand 12, zueinander beabstandet angeordnet. Zur seitlichen Begrenzung des Tragvolumens 10 sind die Erhebungen 17 kegelförmig ausgebildet, wobei deren Haupterstreckung senkrecht zu der Bodenwand 12 und in Richtung des Tragvolumens 10 orientiert ist.

Die Erhebungen 17 sowie die Grundkörper 18 sind aus einem elastischen Material, insbesondere aus einem gummielastischen Material, hergestellt. Die kegelförmigen Erhebungen 17 sind als Hohlkegel ausgebildet, wobei ein Innenraum des jeweiligen Hohlkegels über Öffnungen des Grundkörpers 18 zu einer von dem Tragvolumen 10 abgewandten Seite hin geöffnet ist. Der Grundkörper 18 ist mit der Bodenwand 12 verklebt. Alternativ kann der Grundkörper 18 auch mit der Bodenwand 12 vernäht sein.

Die Bodeneinrichtung 9 ist an der Vorderwand 8 angebracht. Insbesondere ist die Vorderwand 8 mit der Bodenwand 12 einstückig ausgebildet.

Die Bodeneinrichtung 9 ist seitenwandfrei ausgebildet. Das Tragvolumen 10 ist seitlich lediglich durch die Sicherungsmittel 16 und den Halterahmen 11 begrenzt.

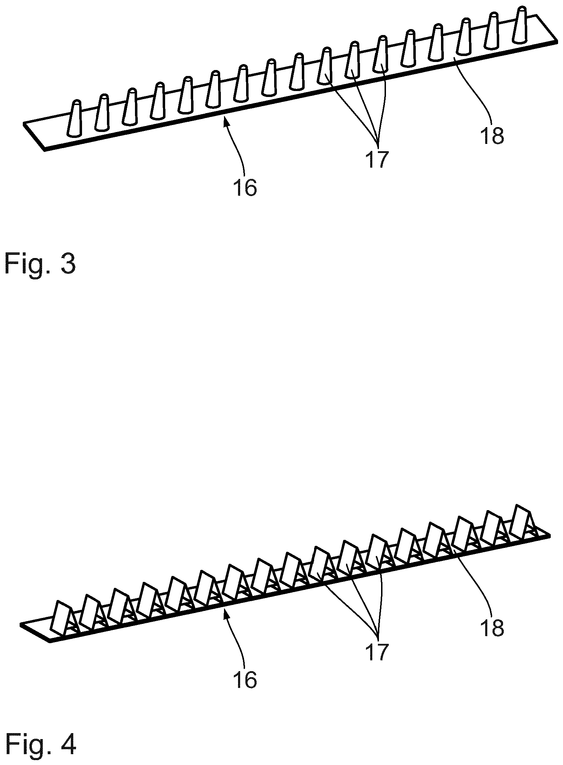

In Fig. 4 ist eine alternative Ausführungsform des Sicherungsmittels 16 dargestellt. Das Sicherungsmittel 16 unterscheidet sich von der vorangegangenen Ausführungsform durch die Geometrie der Erhebungen 17. Die Erhebungen 17 sind in einem Querschnitt, senkrecht zu der Längsachse 13, dreieckförmig, insbesondere A-förmig, ausgebildet. Zwei Ecken der dreieckförmigen Erhebungen 17 sind jeweils mit dem Grundkörper 18 verbunden. Die dritte Ecke ist zu dem Grundkörper 18 beabstandet und auf Seiten des Tragvolumens 10 angeordnet. Die Erhebungen 17 des Sicherungsmittels 16 begrenzen das Tragvolumen 10 zumindest teilweise zu den Seiten.

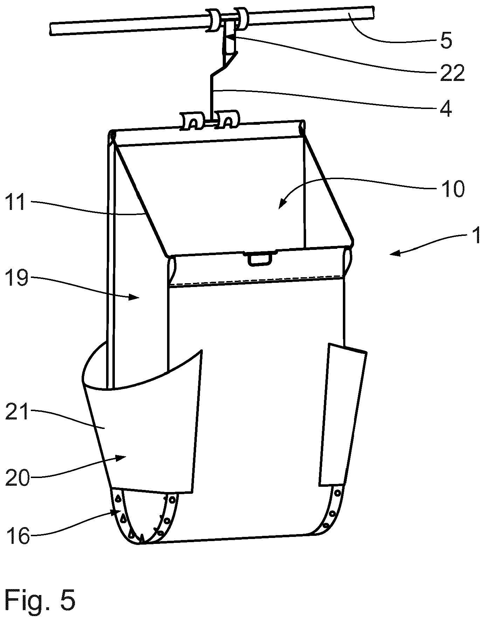

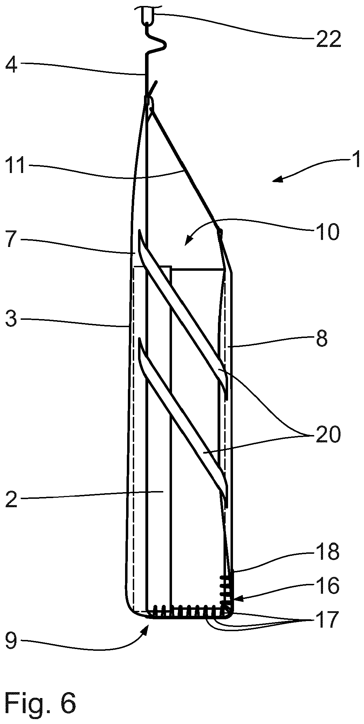

In Fig. 5 ist eine weitere Ausführungsform der Tragvorrichtung 1 dargestellt. Die in Fig. 5 dargestellte Tragvorrichtung 1 unterscheidet sich von den vorangegangenen Ausführungsformen dahingehend, dass die Rückwand 7 mit der Vorderwand 8 in beiden Seitenbereichen 19 über ein Stützmittel 20 verbunden ist. Die Stützmittel 20 begrenzen das Tragvolumen 10 seitlich. In jedem Seitenbereich 19 der Tragvorrichtung 1 ist je ein Stützmittel 20 in Form einer Seitenwand 21 angeordnet. Die Seitenwand 21 ist trichterförmig, insbesondere kegelstumpfsektormantelförmig, ausgebildet. Eine weitere Ausführungsform der Tragvorrichtung 1 ist in Fig. 6 dargestellt. Im Unterschied zu den vorangegangenen Ausführungsformen ist das Stützmittel 20 in Form von Leinen ausgebildet. In jedem Seitenbereich 19 der Tragvorrichtung 1 sind je zwei Stützmittel 20 in Form dieser Leinen, insbesondere in Form von Bändern, angeordnet.

Die Funktionsweise der Tragvorrichtung 1 zum Aufnehmen von Waren 2 ist wie folgt:
Der Trägerrahmen 3 ist über das Lagermittel 4 und den Rolladapter 22 an dem Schienensystem 5 verschiebbar angebracht und kann über einen Antrieb des Schienensystems 5 bewegt werden. Zum Befüllen der Tragvorrichtung 1 mit Waren 2 befindet sich die Bodeneinrichtung 9 in dem Verschlusszustand 14. Die Bodeneinrichtung 9 ist über das Gegenstück 15a mit dem Arretiermittel des Trägerrahmens 3 verbunden. Durch den Halterahmen 11 hindurch werden Waren 2 in das Tragvolumen 10 der Tragvorrichtung 1 eingebracht.

Zum Transport der Waren 2 wird die Tragvorrichtung 1 entlang des Schienensystems 5 bewegt. Dabei dienen die Sicherungsmittel 16 dem verliersicheren Halten 2 in dem Tragvolumen 10. Ein seitliches Herauskippen der Waren 2 aus dem Tragvolumen 10 wird verhindert.

Zum Entladen der Tragvorrichtung 1 wird die im Verschlusszustand 14 im Querschnitt U-förmige Bodeneinrichtung 9 in den Offenzustand 15 überführt, in welchem die Bodeneinrichtung 9 im Querschnitt gerade ist. Das Tragvolumen 10 wird nach unten freigegeben und die Waren 2 fallen schwerkraftbedingt nach unten aus der Tragvorrichtung 1 heraus.

Ein Sicherungsmittel 16 gemäß der in Fig. 4 dargestellten Ausführungsform weist eine erhöhte Stabilität gegenüber in Richtung der Längsachse 13 orientierter Kräfte auf. Die Waren 2 können somit besonders sicher in dem Tragvolumen 10 gehalten werden und verbleiben auch bei transportbedingten Vibrationen und Beschleunigungen durch Anfahr- und Abbremsvorgänge verliersicher in der Tragvorrichtung 1.

Waren 2, welche in vertikaler Richtung über die Bodeneinrichtung 9 hinausragen, werden durch die Stützmittel 20 in den Seitenbereichen 19 der Tragvorrichtung 1 gegen ein Herausfallen geschützt. Die Tragvorrichtung 1 gemäß der in Fig. 5 dargestellten Ausführungsform gewährleistet durch die trichterförmig ausgebildete Seitenwand 21 ein besonders sicheres Beladen der Tragvorrichtung 1 mit Waren 2.

Die in Fig. 6 dargestellte Ausführungsform der Tragvorrichtung 1 weist Stützmittel 20 in Form der Leinen auf. Diese ermöglichen ebenfalls ein seitliches Stützen der Waren 2. Die in Form von Leinen ausgebildeten Stützmittel 20 gewährleisten eine schubweiche Verbindung zwischen der Rückwand 7 und der Vorderwand 8. Die Tragvorrichtung 1 ist somit flexibel an die Dicke der jeweiligen Waren 2 anpassbar. Dies trägt zu einem besonders sicheren Sitz der Waren 2 in dem Tragvolumen 10 beim Transport bei.

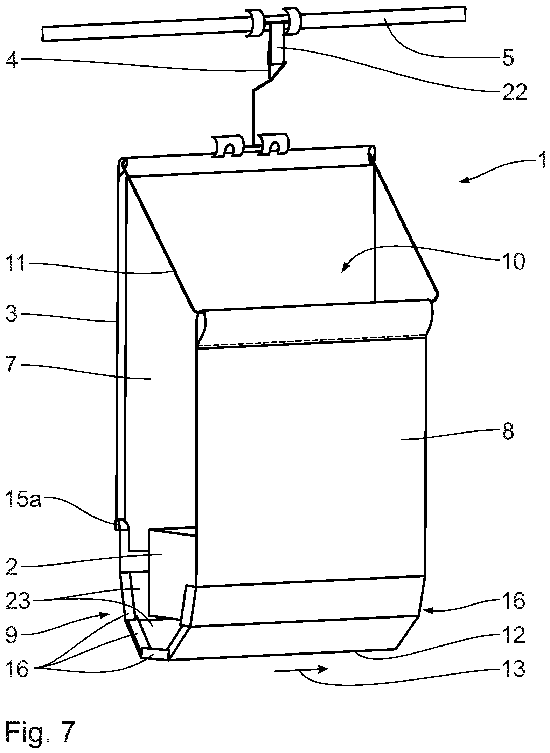

Eine weitere Ausführungsform der erfindungsgemäßen Tragvorrichtung 1 ist in Fig. 7 dargestellt. Im Unterschied zu den vorangegangenen Ausführungsformen umfasst die Bodenwand 12 mehrere starre Bodensegmente 23. Benachbarte Bodensegmente 23 sind jeweils gelenkig miteinander verbunden. Die Drehachsen der gelenkigen Verbindungen zwischen den jeweiligen Bodensegmenten 23 sind parallel zu der Längsachse 13 orientiert. Durch die gelenkige Verbindung der Bodensegmente 23 wird die Flexibilität der Bodeneinrichtung 9 gewährleistet.

Seitlich an den jeweiligen Bodensegmenten 23 sind die Sicherungsmittel 16 angeordnet. Die Sicherungsmittel 16 sind in Form von starren Rippen ausgebildet. Die Sicherungsmittel 16, welche jeweils an den Seiten zueinander benachbarter Bodensegmente 23 angeordnet sind, sind entlang der Längsachse 13 zueinander versetzt an den Bodensegmenten 23 angebracht. In einer Seitenansicht, in Richtung der Längsachse 13, überlappen sich die an zueinander benachbarten Bodensegmenten 23 angebrachten Sicherungsmittel 16 teilweise.

Die Flexibilität der Bodeneinrichtung 9 wird durch die gelenkige Verbindung der Bodensegmente 23 sowie durch die zueinander versetzte Anordnung der Sicherungsmittel 16 entlang der Längsachse 13 gewährleistet. Durch die Ausbildung der Sicherungsmittel 16 in Form von Rippen, welche sich im Verschlusszustand 14 der Tragvorrichtung 1 teilweise überlappen, können Waren 2, insbesondere Waren 2 von geringen Abmessungen, besonders sicher in dem Tragvolumen 10 gehalten werden.

## Patentansprüche

1. Tragvorrichtung zum Aufnehmen von Waren (2), umfassend
- eine Rückwand (7), welche ein Tragvolumen (10) zum Aufnehmen der Waren (2) nach hinten begrenzt,
- eine das Tragvolumen (10) nach vorne begrenzende Vorderwand (8) und
- eine flexible Bodeneinrichtung (9), welche
-- eine Bodenwand (12) aufweist,
-- seitenwandfrei ausgeführt ist,
-- in einem Verschlusszustand (14) und einem Offenzustand (15) anordenbar ist,
-- in dem Verschlusszustand (14) das Tragvolumen (10) nach unten begrenzt,
-- in dem Offenzustand (15) das Tragvolumen (10) nach unten freigibt, und
-- seitlich an der Bodenwand (12) angeordnete Sicherungsmittel (16) zum verliersicheren Halten der Waren (2) in dem Tragvolumen (10) aufweist,
**dadurch gekennzeichnet, dass**
das Sicherungsmittel (16) mehrere, das Tragvolumen (10) seitlich begrenzende, zueinander beabstandet angeordnet Erhebungen (17) aufweist und/oder mindestens eine derartige Erhebung (17) aufweist, welche als Noppe und/oder als Stift und/oder als Steg ausgebildet ist.

2. Tragvorrichtung (1) nach Anspruch 1, **dadurch gekennzeichnet, dass** das Sicherungsmittel (16) einen biegeweichen Grundkörper (18) aufweist, an dem die mindestens eine Erhebungen (17) angebracht ist.

3. Tragvorrichtung (1) nach Anspruch 2 **dadurch gekennzeichnet, dass** der Grundkörper (18) und die mindestens eine Erhebungen (17) aus einem elastischen Material bestehen.

4. Tragvorrichtung (1) nach einem der Ansprüche 1 bis 3, **dadurch gekennzeichnet, dass** die Bodeneinrichtung (9) im Querschnitt in dem Verschlusszustand (14) U-förmig und in dem Offenzustand (15) gerade ist.

5. Tragvorrichtung (1) nach einem der Ansprüche 1 bis 4, **dadurch gekennzeichnet, dass** die Bodeneinrichtung (9) mit der Rückwand (7) und/oder mit der Vorderwand (8) lösbar verbunden ist.

6. Tragvorrichtung (1) nach einem der Ansprüche 1 bis 5, **dadurch gekennzeichnet, dass** die Rückwand (7) und/oder die Vorderwand (8) an einem verschiebbar gelagerten Trägerrahmen (3) angebracht ist.

7. Tragvorrichtung (1) nach einem der Ansprüche 1 bis 6, **dadurch gekennzeichnet, dass** die Rückwand (7), die Vorderwand (8) und die Bodenwand (12) aus einem textilen Material bestehen.

8. Tragvorrichtung (1) nach einem der Ansprüche 1 bis 7, **dadurch gekennzeichnet, dass** die Rückwand (7) mit der Vorderwand (8) in mindestens einem Seitenbereich (19) über ein Stützmittel (20) zum verliersicheren Halten der Waren (2) in dem Tragvolumen (10) verbunden ist, welches das Tragvolumen (10) zumindest abschnittsweise seitlich begrenzt.

9. Tragvorrichtung (1) nach Anspruch 8, **dadurch gekennzeichnet, dass** das Stützmittel (20) in Form einer Seitenwand (21) ausgebildet ist.

10. Tragvorrichtung (1) nach Anspruch 9, **dadurch gekennzeichnet, dass** die Seitenwand (21) trichterförmig, insbesondere kegelstumpfsektormantelförmig, ausgebildet ist.

11. Tragvorrichtung (1) nach Anspruch 8, **dadurch gekennzeichnet, dass** das Stützmittel (20) in Form von Leinen und/oder Stangen ausgebildet ist.

## Claims

1. Carrying device for receiving goods (2), comprising
- a rear wall (7) which delimits a carrying volume (10) for receiving the goods (2) towards the rear,
- a front wall (8) delimiting the carrying volume (10) towards the front and
- a flexible bottom device (9), which
-- has a bottom wall (12),
-- is designed without side walls,
-- can be arranged in a closed state (14) and an open state (15),
-- in the closed state (14) delimits the load-bearing volume (10) downwards,
-- in the open condition (15) releases the support volume (10) downwards, and
-- has securing means (16) arranged on the side of the bottom wall (12) for loss-proof retention of the goods (2) in the carrying volume (10),
**characterized in that**
the securing means (16) has a plurality of projections (17) laterally delimiting the carrying volume (10) and arranged at a distance from one another and/or has at least one such projection (17) which is designed as a knob and/or as a pin and/or as a web.

2. Carrying device (1) according to claim 1, **characterized in that** the securing means (16) comprises a flexible base body (18) to which the at least one projection (17) is attached.

3. Carrying device (1) according to claim 2, **characterized in that** the base body (18) and the at least one projection (17) consist of an elastic material.

4. Carrying device (1) according to any one of claims 1 to 3, **characterized in that** the bottom device (9) in cross-section is U-shaped in the closed state (14) and straight in the open state (15).

5. Carrying device (1) according to any one of claims 1 to 4, **characterized in that** the bottom device (9) is detachably connected to the rear wall (7) and/or to the front wall (8).

6. Carrying device (1) according to any one of claims 1 to 5, **characterized in that** the rear wall (7) and/or the front wall (8) is attached to a displaceably mounted carrier frame (3).

7. Carrying device (1) according to any one of claims 1 to 6, **characterized in that** the rear wall (7), the front wall (8) and the bottom wall (12) consist of a textile material.

8. Carrying device (1) according to any one of the claims 1 to 7, **characterized in that** the rear wall (7) is connected to the front wall (8) in at least one side region (19) via a supporting means (20) for loss-proof retention of the goods (2) in the carrying volume (10), which means laterally delimits the carrying volume (10) at least in sections.

9. Carrying device (1) according to claim 8, **characterized in that** the supporting means (20) is configured in the form of a side wall (21).

10. Carrying device (1) according to claim 9, **characterized in that** the side wall (21) is funnel-shaped, in particular configured in the form of a truncated cone sector shell.

11. Carrying device (1) according to claim 8, **characterized in that** the supporting means (20) is configured in the form of lines and/or rods.

## Revendications

1. Dispositif porteur destiné à recevoir des marchandises (2), comprenant
- une paroi arrière (7) qui délimite vers l'arrière un volume porteur (10) destiné à recevoir les marchandises (2),
- une paroi avant (8) délimitant le volume porteur (10) vers l'avant et
- un dispositif de fond flexible (9) qui
-- a une paroi de fond (12),
-- est conçu sans parois latérales,
-- peut être disposé dans un état de fermeture (14) et dans un état d'ouverture (15),
- dans l'état de fermeture (14) limite le volume porteur (10) vers le bas,
- dans l'état d'ouverture (15) libère le volume porteur (10) vers le bas, et
-- présente des moyens de sécurité (16) disposés sur le côté de la paroi de fond (12) pour maintenir les marchandises (2) dans le volume porteur (10) sans risque de perte,
**caractérisé en ce que**
le moyen de sécurité (16) présente plusieurs surélévations (17) limitant latéralement le volume porteur (10) et disposées à distance les unes des autres et/ou présente au moins une telle surélévation (17) qui est réalisée sous la forme d'un bouton et/ou d'une broche et/ou d'une barrette.

2. Dispositif porteur (1) selon la revendication 1, **caractérisé en ce que** le moyen de sécurité (16) présente un corps de base (18) souple en flexion, sur lequel est montée ladite au moins une surélévation (17).

3. Dispositif porteur (1) selon la revendication 2, **caractérisé en ce que** le corps de base (18) et l'au moins une surélévation (17) sont constitués d'un matériau élastique.

4. Dispositif porteur (1) selon l'une quelconque des revendications 1 à 3, **caractérisé en ce que** le dispositif de fond (9) a une section transversale en forme de U dans l'état de fermeture (14) et droite dans l'état d'ouverture (15).

5. Dispositif porteur (1) selon l'une quelconque des revendications 1 à 4, **caractérisé en ce que** le dispositif de fond (9) est relié de manière amovible à la paroi arrière (7) et/ou à la paroi avant (8).

6. Dispositif porteur (1) selon l'une quelconque des revendications 1 à 5, **caractérisé en ce que** la paroi arrière (7) et/ou la paroi avant (8) est montée sur un cadre de support (3) logé de manière coulissante.

7. Dispositif porteur (1) selon l'une quelconque des revendications 1 à 6, **caractérisé en ce que** la paroi arrière (7), la paroi avant (8) et la paroi de fond (12) sont constituées d'un matériau textile.

8. Dispositif porteur (1) selon l'une quelconque des revendications 1 à 7, **caractérisé en ce que** la paroi arrière (7) est reliée à la paroi avant (8) dans au moins une zone latérale (19) par l'intermédiaire d'un moyen de soutien (20) destiné à maintenir les marchandises (2) dans le volume porteur (10) sans risque de perte, qui limite latéralement le volume porteur (10) au moins par sections.

9. Dispositif porteur (1) selon la revendication 8, **caractérisé en ce que** le moyen de soutien (20) est réalisé sous la forme d'une paroi latérale (21).

10. Dispositif porteur (1) selon la revendication 9, **caractérisé en ce que** la paroi latérale (21) est réalisée en forme d'entonnoir, en particulier en forme d'enveloppe sectorielle tronconique.

11. Dispositif porteur (1) selon la revendication 8, **caractérisé en ce que** le moyen de soutien (20) est réalisé sous la forme de cordes et/ou de barres.
